# EUROPEAN PATENT SPECIFICATION

(11) **EP 3 101 457 B1**
(45) Date of publication and mention of the grant of the patent: **22.09.2021**
(21) Application number: 15758947.4
(22) Date of filing: 09.01.2015
(51) Int. Cl.: G02B 6/42, G02B 6/32

(54) **OPTICAL CONNECTOR, CABLE, AND OPTICAL COMMUNICATION DEVICE**
OPTISCHER STECKER, KABEL UND VORRICHTUNG ZUR OPTISCHEN KOMMUNIKATION
CONNECTEUR OPTIQUE, CÂBLE, ET DISPOSITIF DE COMMUNICATIONS OPTIQUES

(30) Priority: 06.03.2014 JP 2014043735
(43) Date of publication of application: 07.12.2016
(73) Proprietor: Sony Group Corporation, Tokyo 108-0075 (JP)
(72) Inventor: TOBA, Kazuaki, Tokyo 108-0075 (JP); YAMAMOTO, Masanari, Tokyo 108-0075 (JP); SUZUKI, Kazuyoshi, Tokyo 108-0075 (JP); KONDO, Kazumoto, Tokyo 108-0075 (JP); NAKAJIMA, Yasuhisa, Tokyo 108-0075 (JP); MIYAZAKI, Satoshi, Tokyo 108-0075 (JP)
(74) Representative: D Young & Co LLP
(86) International application number: PCT/JP2015/050492
(87) International publication number: WO 2015/133165

(56) References cited:
- WO-A1-2012/105354
- JP-A- H1 062 605
- JP-A- H07 306 336
- JP-A- H07 306 337
- JP-A- 2006 139 094
- JP-A- 2013 522 689
- US-A- 4 802 460
- US-A1- 2003 113 071
- US-A1- 2003 113 077
- US-A1- 2011 229 089
- US-A1- 2012 008 899
- US-A1- 2013 279 853
- Edmund Optics: "Fundamentals of Lasers", , 18 February 2021 (2021-02-18), XP055777620, Retrieved from the Internet: URL:https://www.edmundoptics.eu/knowledge- center/application-notes/lasers/fundamenta ls-of-lasers/ [retrieved on 2021-02-18]

## Description

### Technical Field

This technology relates to an optical connector, a cable, and an optical communication device, and enables robust performance of optical communication.

### Background Art

In the past, an interface for performing optical communication by using an optical fiber array is proposed. For example, in Patent Literature 1, light collimation coupling is performed by locating a plurality of collimator lenses in a horizontal direction, in order to make processing easy and enable large capacity transmission. Also, the light collimation coupling is utilized, and thus light signals between a transmission side optical connector and a reception side optical connector are collimated light, and therefore even if the distance between the connectors (the distance in an emission direction of the light signals) is not maintained highly precisely at the time of optical connector connection, robust optical communication can be performed.

### Citation List

### Patent Literature

Patent Literature 1: JP 4742729B
US 2003/113077 describes a lens array for use in fiber optic communications modules where multiple optical fibers are used in either transmitting or receiving optical signals. The lens array is adapted for optically interfacing a set of photoactive components such as semiconductor lasers or photo diodes deployed on an integrated circuit chip with a set of optical communications fibers supported in a ferrule. The individual lens elements within the array are shaped to have a greater height than width and are fitted together by being truncated along their boundaries with adjoining lenses. The increased height of the lens elements allows them to gather and transfer more light between the photoactive components and the optical fibers. US 2003/113071 describes a subassembly for use in fiber optic communications systems where multiple optical fibers are used in either transmitting or receiving optical signals. The subassembly is adapted for being mechanically and optically connected with a ferrule supporting a set of optical communications fibers. The subassembly uses a carrier assembly to support an optoelectronic device having a corresponding set of photoactive components which are operative for either converting photonic signals to electrical signals (in a receiver) or converting electrical signals to photonic signals (in a transmitter). The subassembly includes a lens and alignment frame having a set of guide pins and an array of lenses for interfacing the fibers of the ferrule with the photoactive components of the optoelectronic device on the carrier assembly.; The carrier assembly may also include signal processing devices and a circuit board having an edge connector for removably connecting the subassembly with a computer or communications system.
JP H10 62605 describes an array lens.
JP H07 306336 describes an optical semiconductor module.
JP H07 306337 describes another optical semiconductor module.
JP 2013 522689 describes small-form-factor fiber optic interface assemblies for electronic devices. The fiber optic interface assemblies include a receptacle (120) configured to matingly engage with a plug of a fiber optic cable assembly. Example assemblies include a flexible mount supported by a circuit board and configured to absorb a mechanical force when the plug is mated to the receptacle. The receptacle aperture has at least one transverse dimension of between about 2 mm and 4 mm. The assemblies can support both optical and electrical communication and functionality.
US 2013/279853 an optical lens connector includes alignment features for passive connection alignment. The alignment features are C-shaped and have generally planar surfaces to interface with a mating connector. The alignment features passively align an optical fiber with an optical lens in the optical lens connector, by fitting adjacent to planar surfaces of the mating connector. When interfaced together, the alignment features restrict lateral and vertical motion of the connectors with respect to each other, which helps keep the optical lens aligned with the optical fiber.
US 2012/0008899 illustrates a lens array and optical module including a lens array.

### Summary of Invention

### Technical Problem

In the meantime, in the optical connector that utilizes the light collimation coupling, the collimator lens of the transmission side optical connector and the collimator lens of the reception side optical connector are at facing positions, and thus a mechanism that positions the connectors such that the collimator lenses face each other at the time of optical connector connection is necessary. For example, when a plurality of collimator lenses are arrayed in the horizontal direction, positioning and fixation of the optical connectors are performed at an outside position of the collimator lens of one of the end portion side and at an outside position of the collimator lens of another end portion side. In this way, the transmission side optical connector and the reception side optical connector can be connected in a state in which a plurality of collimator lenses are positioned precisely. However, if force in a turning direction about an axis at an array direction of a plurality of collimator lenses is exerted on the optical connectors by its own weight of the optical fiber array or the like, a difference is generated between the emission direction of the collimated light and the optical axis direction of the collimator lens in the reception side optical connector or the like. Hence, if the light signal does not enter into the collimator lens because of the difference between the emission direction of the light signal and the optical axis direction of the lens or the like, it is concerned that the light signal after the light collection decreases its light amount, and that it becomes difficult to perform the robust optical communication.

Thus, in this technology, a purpose is to provide an optical connector, a cable, and an optical communication device which can perform robust optical communication, even if the force in the turning direction about an axis at the array direction of the lenses is exerted.

### Solution to Problem

Particular and preferred aspects of the present invention are described in the appended claims.

In this technology, the light signal which is the collimated light from the transmission side optical connector enters into a light transmission path or a light detection unit by lenses.

### Advantageous Effects of Invention

According to this technology, the lenses that collect the entering light signal to the light transmission path or the light detection unit is provided in the housing that is coupled to the transmission side optical connector of the light signal. Also, the light transmission path or the light detection unit is retained for each lens in the housing. In the housing, the attachment portion for attaching the housing in an attachable and detachable manner to the transmission side optical connector is provided in the array direction of the plurality of lenses. In the plurality of lenses, the entrance range of the light signal that is collectable to the light transmission path or the light detection unit is expanded in the direction orthogonal to the array direction of the lenses. As described above, in the lenses, the entrance range of the light signal is expanded in the direction orthogonal to the array direction of the lenses, and thus even if the force in the turning direction about the axis at the array direction of the lenses is exerted, the entering light signal can be collected to the light transmission path or the light detection unit. Thus, robust optical communication can be performed. Note that the effects described in the present specification are just examples and are not limitative, and there may be additional effects.

### Brief Description of Drawings

[FIG. 1] FIG. 1 is a diagram illustrating a configuration of an optical communication system.
[FIG. 2] FIG. 2 is a front view of a reception side optical connector.
[FIG. 3] FIG. 3 is a front view of a reception side optical connector for which turning of a connector in a connecting state is not considered.
[FIG. 4] FIG. 4 is a diagram for describing operation of a reception side optical connector when turning of a connector does not occurs in a connecting state.
[FIG. 5] FIG. 5 is a diagram for describing operation of a reception side optical connector when turning of a connector occurs in a connecting state.

### Description of Embodiment(s)

In the following, a mode for carrying out the present technology will be described. Note that description will be made in the following order.
1. Configuration of Optical Communication System
2. Configuration of Optical Connector
3. Operation of Optical Connector

### <1. Configuration of Optical Communication System>

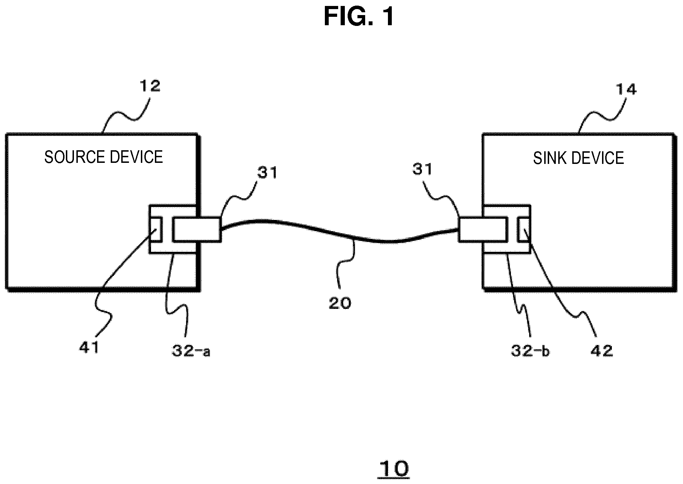

FIG. 1 illustrates a configuration of an optical communication system that uses an optical connector of the present technology. In an optical communication system 10, a source device 12 which is an information transmission side and a sink device 14 which is an information reception side are connected via a light transmission path, for example an optical fiber array 20.

The source device 12 is a device that can output video and audio content, information of computer data, and the like. For example, the source device 12 is a device such as a set-top box that receives a broadcast program, a delivered program, and the like, a reproduction device that reproduces video and audio content recorded in a recording medium, a server that stores various content, information of computer data, and the like, and an information transmitter device.

The sink device 14 receives information output from the source device 12, and is a device that performs a process to present the received information to a user and a process to record the received information in a recording medium or the like. For example, the sink device 14 is a device such as a video display device, an audio output device, a recording device, or an information receiver device.

In the optical communication system 10, an optical connector is used to connect the optical fiber array 20 to the source device 12 and the sink device 14. The optical connector is configured with a plug 31 and a receptacle 32, and the plug 31 is attached to the receptacle 32 in an attachable and detachable manner.

The plug 31 is provided at both ends of the optical fiber array 20 for example, and the receptacle 32 is provided in each of the source device 12 and the sink device 14 for example. A light source 41 that emits laser light is provided in a receptacle 32-a of the source device 12, and a light detection unit 42 that converts a light signal to an electrical signal is provided in a receptacle 32-b of the sink device 14.

Here, as illustrated in FIG. 1, the plug 31 provided at one end of the optical fiber array 20 is coupled to the receptacle 32-a of the source device 12, and the plug 31 provided at another end of the optical fiber array 20 is coupled to the receptacle 32-b of the sink device 14. Further, the receptacle 32-a of the source device 12 emits a laser light modulated in accordance with the information to transmit as a light signal from the light source 41. As described above, if the transmitted information is transmitted as the light signal, communication can be performed between the source device 12 and the sink device 14 via the optical fiber array 20, by the receptacle 32-b of the sink device 14 that collects the light signal to the light detection unit 42 and generates the electrical signal according to the light signal. Note that the optical communication system 10 may include a configuration that transmits information relevant to the sink device 14 or the like to the source device via an optical fiber cable.

### <2. Configuration of Optical Connector>

In the optical communication system 10, the light signal from the optical fiber end surface and the light source is converted to a collimated light (parallel light) with an optical coupling lens (collimator lens) provided at the vicinity, and is emitted from a transmission side optical connector. Also, a reception side optical connector provided with a light coupling lens (collimator lens) is plugged in the transmission side optical connector in such a manner that the lenses face each other. The collimator lens provided in the reception side optical connector causes the light signal which is the collimated light to enter into the light detection unit provided at the vicinity, in order to cause the light detection unit to generate an electrical signal according to the light signal. As described above, optical communication is performed between the transmission side device and the reception side device, by performing light collimation coupling by using the optical connectors.

Also, by using the light collimation coupling, robust optical communication is enabled even with an interval in an emission direction of the light signal to a certain degree. Further, the light signal between the transmission side optical connector and the reception side optical connector is the collimated light, and thereby position adjustment precision of the optical axis of the lenses at the time of the connection between the transmission side optical connector and the reception side optical connector is relaxed to a certain degree, and usability of the optical connectors is expected to increase dramatically.

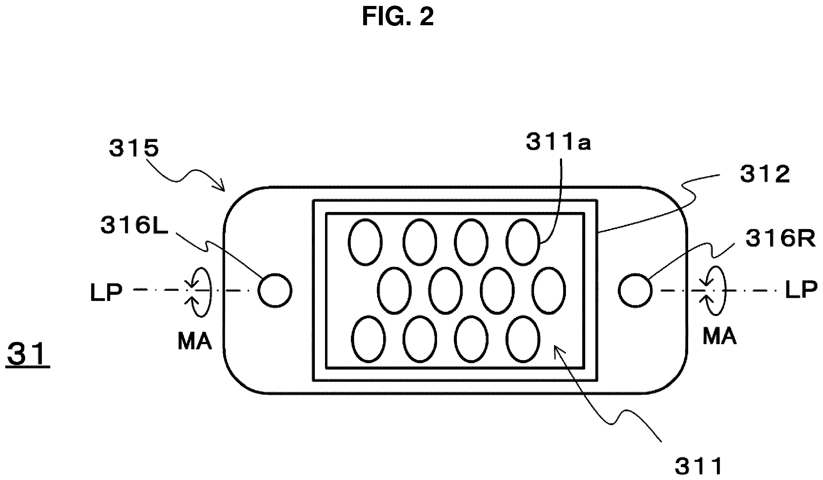

FIG. 2 illustrates a front view of the reception side optical connector, in the optical connector that utilizes the light collimation coupling. Note that, in the following description, a case in which a plug is used as the reception side optical connector will be described. Also, in the optical fiber array connected to the optical connector, optical communication is performed by using twelve optical fiber cables, by stacking three ribbon cables with four optical fiber cables arrayed in the horizontal direction, for example.

The plug 31 includes a lens array 311, a plug housing 315, and attachment portions 316L, 316R.

The lens array 311 is configured with lenses 311a of the number of optical fiber cables in the optical fiber array 20. The lenses 311a are located corresponding to the locations of the optical fiber cables of the optical fiber array. For example, four lenses 311a is arrayed in the horizontal direction, and three layers of the four lenses 311a arrayed in the horizontal direction 3 are stacked. Each lens 311a collects the light signal each emitted from the transmission side optical connector, to the end surface (entrance surface) of the corresponding optical fiber cable.

The plug housing 315 retains the lens array 311 and the optical fiber array. A fitting protrusion portion 312 is provided in this plug housing 315. The fitting protrusion portion 312 has a shape and a size corresponding to a fitting hole (not illustrated in a drawings) provided in the receptacle which is the transmission side of the light signal that enters into the lens array 311, and is inserted into the fitting hole of the receptacle when the plug 31 is connected to the receptacle. That is, the plug 31 is configured to be fixed to the receptacle (the transmission side optical connector) in an attachable and detachable manner.

The fitting protrusion portion 312 has a tube shape, and is formed to protrude in an insertion direction into the fitting hole from the plug housing 315. The lens array 311 is provided in an inner portion side of the fitting protrusion portion 312.

The attachment portions 316L, 316R are provided in the plug housing 315. Here, a plurality of lens groups consisting of a plurality of lenses arrayed in a predetermined direction are provided adjacent to each other as in the lens array 311, and the attachment portions are provided at the position of the lens group that is positioned at the center so as to line up in the array direction of a plurality of lenses. For example, as illustrated in FIG. 2, three layers of lens groups including four lenses 311a arranged in the horizontal direction are arranged and stacked. In this case, the attachment portions 316L, 316R are provided at the positions of the lens group of the middle layer outside the fitting protrusion portion 312, with predetermined intervals in the horizontal direction which is the array direction of the lenses 311a. The attachment portions 316L, 316R fix the reception side connector to the transmission side connector, in a state in which the fitting protrusion portion 312 is inserted in the fitting hole of the transmission side connector. For example, screws are used as the attachment portions 316L, 316R, and these screws are attached to screw holes provided in the transmission side connector, in order to fix the reception side connector to the transmission side connector in an attachable and detachable manner.

Note that, in the receptacle which is the transmission side optical connector, the lens array that optically couples to the lens array of the reception side optical connector is provided. Also, as described above, the screw holes are provided corresponding to the fitting hole and the attachment portions 316L, 316R in the receptacle.

The optical connectors are configured as described above to make it needless to individually perform the position adjustment of the lenses that perform the light collimation coupling, and the reception side connector is only inserted into the transmission side optical connector and attached in an attachable and detachable manner with the attachment portions, in order to inexpensively and easily enable the optical communication that uses a plurality of optical fiber cables.

In the optical connectors of this configuration, it is concerned that the plugs 31 to which the optical fiber array 20 is connected turn like arrows MA, about an axis at an array direction LP of the attachment portions 316L, 316R, by its own weight of the optical fiber array or the like. Note that the array direction of the attachment portions 316L, 316R is the array direction of a plurality of optical fiber cables in the lens groups. Thus, the lenses 311a of the plug 31 expands an entrance range of the light signal that is collectable to the end surface (the entrance surface) of the optical fiber cable, in the direction orthogonal to the array direction of the lenses, in order to allow the light signal that is emitted from the transmission side connector into the optical fiber cable, even if turned in the direction of the arrow MA. For example, the entrance range expands in such a manner that the light signal is collected to the end surface of the optical fiber cable in the allowed range of turning in a state in which the plug housing 315 is fixed to the transmission side optical connector in an attachable and detachable manner by the attachment portions 316L, 316R.

When the array direction LP of the attachment portions 316L, 316R is the horizontal direction for example, the curvature in the vertical direction is made larger than in the horizontal direction, so that the lenses 311a have ellipsoidal lens shapes in which the entrance range in the vertical direction is expanded more than in the horizontal direction for example. As described above, when the ellipsoidal lens shapes have the short axis in the array direction of the lenses and the long axis in the direction orthogonal to the array direction, the plug 31 can collect the light signal emitted from the transmission side connector, to the end surface of the optical fiber cable, even if turned in the direction of the arrow MA.

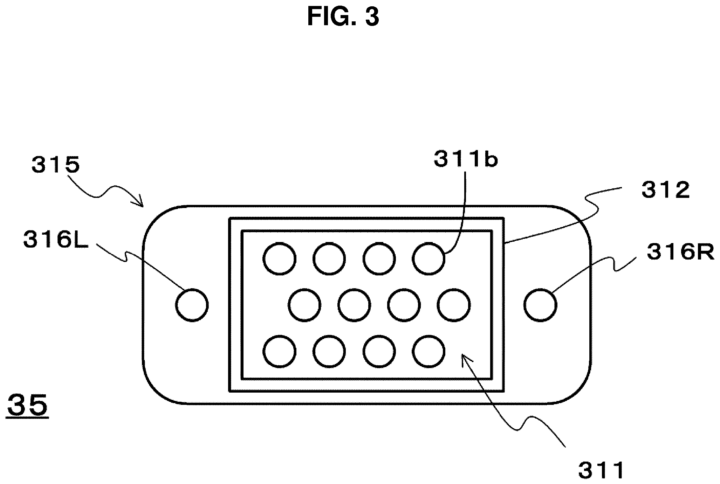

Note that FIG. 3 illustrates as reference a front view of the reception side optical connector for which turning of the connector in the connecting state is not considered, in the optical connector that uses the light collimation coupling. The plug 35 of this reception side optical connector makes the curvatures of the lenses 311b identical in the horizontal direction and the vertical direction for example, as the position relationship is in a fixed state at the time of connection with the transmission side optical connector.

### <3. Operation of Optical Connector>

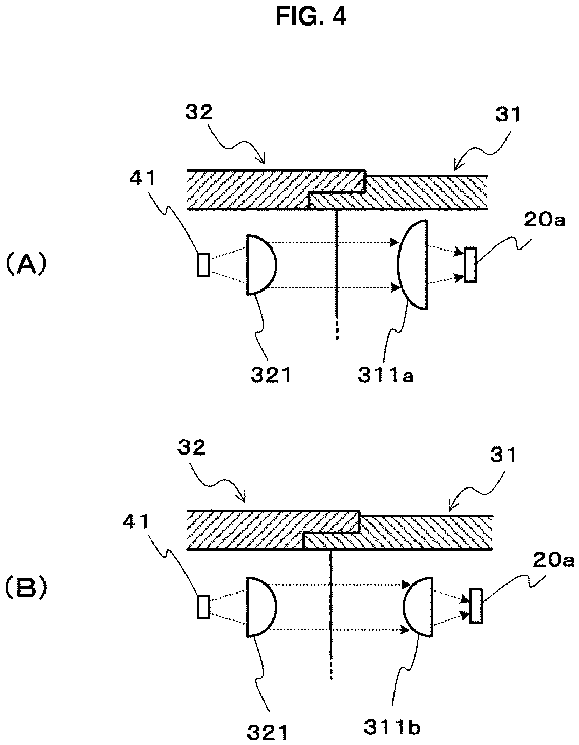

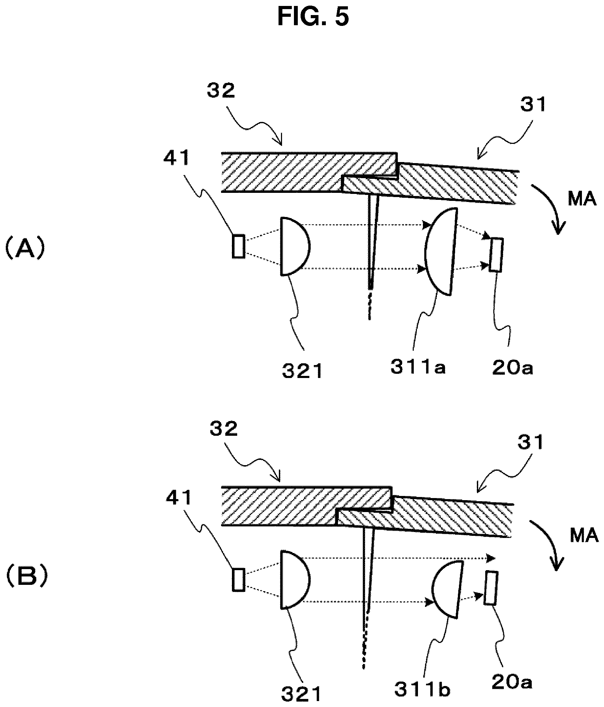

FIG. 4 and FIG. 5 are diagrams for describing operation of the reception side optical connector. Note that FIGS. 4 and 5 illustrate only one optical fiber cable in order to facilitate its description. Also, FIG. 4 illustrate a case in which turning of the connector does not occurs in the connecting state, and FIG. 5 illustrate a case in which turning of the connector occurs in the connecting state, from a turning axis direction respectively.

FIG. 4 (A) illustrates a case in which the curvature of the lens is set by considering the turning of the connector in the connecting state. Also, FIG. 4 (B) illustrates a past case in which the curvatures in the horizontal direction and the vertical direction are identical with each other.

As illustrated in FIG. 4 (A), in the lens 311a, the curvature in the vertical direction is made larger than the curvature in the horizontal direction, in such a manner that the entrance range of the light signal is expanded in the direction orthogonal to the array direction of the lens 311a. The light signal emitted via a collimator lens 321 from the light source 41 of the transmission side connector is collected to the end surface (the entrance surface) 20a of the optical fiber cable by the lens 311a.

As illustrated in FIG. 4 (B), the light signal emitted from the light source 41 via the collimator lens 321 of the transmission side connector is collected to the end surface 20a of the optical fiber cable by the lens 311b in the same way, when the curvatures in the vertical direction and the horizontal direction of the lens 311b are equal to each other.

FIG. 5 (A) illustrates a case in which the curvatures of the lens are set, considering the turning of the connector in the connecting state. Also, FIG. 5 (B) illustrates a past case in which the curvatures in the horizontal direction and the vertical direction are identical with each other.

As illustrated in FIG. 5 (A), in the lens 311a, the curvature in the vertical direction is made larger than the curvature in the horizontal direction, in such a manner that the entrance range of the light signal is expanded in the direction orthogonal to the array direction of the lens 311a. Thus, the light signal emitted via the collimator lens 321 from the light source 41 of the transmission side connector can be collected to the end surface 20a of the optical fiber cable, even if the reception side connector turns in the arrow MA direction by the own weight of the optical fiber array or the like. Thus, even if the turning of the connector in the connecting state occurs, robust optical communication can be performed.

Note that, as illustrated in FIG. 5 (B), when the curvatures in the vertical direction and the horizontal direction of the lens are equal to each other, if the reception side connector turns in the arrow MA direction, the light signal emitted via the collimator lens 321 from the light source 41 of the transmission side connector does not enter into the lens 311b. That is, the light signal that enters into the lens 311b decreases as the turning amount of the reception side connector becomes large, and the light amount of the light signal collected to the end surface 20a of the optical fiber cable decreases. Thus, robust optical communication is unable to perform.

As described above, in the reception side connector, at the lens 311a, the entrance range of the collectable light signal is expanded in the orthogonal direction to the axis direction of the turning of the connector that occurs in the connecting state. For example, when the axis direction is the horizontal direction, the curvature in the vertical direction is made large, and the size in the vertical direction of the lens is made large. In this way, even if misalignment occurs in the optical axis direction of the lens 311a by the turning of the connector in the connecting state, the light signal can be collected to the end surface of the optical fiber cable which is the light transmission path, and the robust optical communication can be performed.

Also, the attachment portions are provided in the array direction of a plurality of lenses in the lens groups at the position of the lens group of the center, when a plurality of lens groups consisting of a plurality of arrayed lenses are provided adjacent to each other. Thus, when the connector turns about an axis in the array direction of the attachment portions, the turning of the lens becomes small as compared with a case in which the position of the axis is at the position of the lens group of the end portion. Hence, even if the expansion amount of the entrance range of the light signal is made small, the light signal from the transmission side connector is collected to the end surface (the entrance surface) of the optical fiber cable, in order to perform the robust optical communication. Thus, the lens 311a can be located highly densely, thereby reducing the size of the connector.

In addition, for example, if the attachment portions are provided also in the direction orthogonal to the array direction of the attachment portions, the turning of the connector can be prevented in the connecting state. Also, the turning of the reception side connector can be prevented, by increasing the attachment precision and the strength of the fitting part of the transmission side connector and the reception side connector. However, when this method is used, the size reduction and the cost reduction of the optical connectors are difficult. Also, attachment and detachment operation of the optical connectors becomes cumbersome, by increasing the attachment portions. However, the lens of the reception side connector is configured such that the entrance range of the light signal that is collectable to the end surface of the optical fiber cable is expanded in the direction orthogonal to the array direction of the lenses (the array direction of the attachment portions), in order to provide a small-sized and low-cost optical connector of easy attachment and detachment operation. Also, the lens may be configured such that the entrance range of the light signal that is collectable to the end surface of the optical fiber cable is expanded in the direction orthogonal to the array direction of the lenses (the array direction of the attachment portions)Note that a plurality of lenses may be provided in a separated state or may be provided in an integrated state.

In the meantime, the above embodiment has described a case in which the reception side optical connector is the plug, but the reception side optical connector may be a receptacle. In this case, even if the plug of the transmission side optical connector turns and the output direction of the light signal shifts, the entrance range is expanded in the shift direction of the output direction of the light signal in the receptacle of the reception side device, and therefore the light signal from the plug that turns can be collected to the light detection unit of the receptacle. Thus, robust optical communication can be performed, even if the plug of the transmission side optical connector turns about an axis in the array direction of the attachment portions due to the attachment error or the like, when the receptacle and the plug are connected. Note that the optical connector is configured satisfactorily if the transmission side optical connector and the reception side connector are fixed to each other in an attachable and detachable manner, and is not limited to a configuration that uses the plug and the receptacle.

Further, the optical connector for which the entrance range of the light signal that is collectable to the light transmission path or the light detection unit is expanded in the direction orthogonal to the array direction of the lenses may be separately provided from the optical fiber cable, and may be provided as the optical fiber cable into which the optical connector is integrated.

Note that the present technology should not be interpreted as being limited to the embodiments of the above technology. The embodiments of this technology disclose the present technology in a form of illustration, and it is obvious that a skilled person can achieve modification and substitution of the embodiments. That is, the claims should be referred to determine the scope of the present technology.

### Industrial Applicability

As described above, the lens is such that the entrance range of the light signal is expanded in the direction orthogonal to the array direction of the lenses, and thus even if the force in the turning direction about an axis in the array direction of the lenses is exerted, the light signal from the transmission side can be collected to the light transmission path and the light detection unit, in order to enable the robust optical communication. Thus, this technology is suited for a system that uses a communication device or an electronic device that performs communication of video information, audio information, various types of data, and the like, via a light transmission path such as an optical fiber cable.

### Reference Signs List

- 10: optical communication system
- 12: source device
- 14: sink device
- 20: optical fiber array
- 20a: end surface
- 31,35: plug
- 32, 32-a, 32-b: receptacle
- 41: light source
- 42: light detection unit
- 311: lens array
- 311a, 311b: lens
- 312: fitting protrusion portion
- 315: plug housing
- 316L, 316R: attachment portion
- 321: collimator lens

## Claims

1. An optical connector comprising:
a lens (311a) that collects an entering light signal to a light transmission path or a light detection unit;
a housing (315) that retains a plurality of the lenses (311) and the light transmission path or the light detection unit (42) and that is configured to be coupled to a transmission side optical connector of the light signal; and
an attachment portion (316L, 316R) provided in an array direction of the plurality of lenses, for attaching the housing to the transmission side optical connector in an attachable and detachable manner,
wherein, in the plurality of lenses, an entrance range of the light signal that is collectable to the light transmission path or the light detection unit is expanded in a direction orthogonal to the array direction of the lenses, wherein
the plurality of lenses have an ellipsoidal shape with a short axis in the array direction of the lenses and a long axis in a direction orthogonal to the array direction;
a plurality of lens groups including the plurality of arrayed lenses are provided adjacent to each other;
the lens groups are arranged as layers; and
the attachment portion is provided in the array direction of the plurality of lenses at a center position of the layers.

2. The optical connector according to claim 1, wherein
the plurality of lenses expand the entrance range in such a manner that the light signal is collected to the light transmission path or the light detection unit, in an allowed range of turning about an axis in the array direction of the lenses in a state in which the housing is attached to the transmission side optical connector by the attachment portion.

3. A cable (20) terminated by the optical connector according to claim 1.

4. An optical communication device (10) comprising the optical connector according to claim 1.

## Patentansprüche

1. Optischer Steckverbinder, der Folgendes umfasst:
eine Linse (311a), die ein eintretendes Lichtsignal zu einem Lichtübertragungspfad oder einer Lichtdetektionseinheit sammelt;
ein Gehäuse (315), das mehrere der Linsen (311) und den Lichtübertragungspfad oder die Lichtdetektionseinheit (42) enthält und das dafür ausgelegt ist, mit einem übertragungsseitigen optischen Steckverbinder des Lichtsignals gekoppelt zu werden; und
einen Anbringanteil (316L, 316R), vorgesehen in einer Arrayrichtung der mehreren Linsen, zum Anbringen des Gehäuses an dem übertragungsseitigen optischen Steckverbinder auf anbringbare und ablösbare Weise, wobei, in den mehreren Linsen, ein Eintrittsbereich des Lichtsignals, das zu dem Lichtübertragungspfad oder der Lichtdetektionseinheit sammelbar ist, in einer zu der Arrayrichtung der Linsen senkrechten Richtung aufgeweitet wird, wobei
die mehreren Linsen eine ellipsoide Gestalt aufweisen, mit einer kurzen Achse in Arrayrichtung der Linsen und einer langen Achse in einer Richtung senkrecht zu der Arrayrichtung;
wobei mehrere Linsengruppen, die die mehreren arrayförmig angeordneten Linsen beinhalten, aneinander angrenzend vorgesehen sind;
wobei die Linsengruppen als Schichten angeordnet sind; und
der Anbringanteil in der Arrayrichtung der mehreren Linsen an einer Mittenposition der Schichten vorgesehen ist.

2. Optischer Steckverbinder nach Anspruch 1, wobei die mehreren Linsen den Eintrittsbereich auf eine solche Weise erweitern, dass das Lichtsignal zu dem Lichtübertragungspfad oder zu der Lichtdetektionseinheit in einem zulässigen Drehbereich um eine Achse in der Arrayrichtung der Linsen herum gesammelt wird, in einem Zustand, in dem das Gehäuse durch den Anbringanteil an dem übertragungsseitigen optischen Steckverbinder angebracht ist.

3. Kabel (20), abgeschlossen durch den optischen Steckverbinder nach Anspruch 1.

4. Optische Kommunikationsvorrichtung (10), die den optischen Steckverbinder nach Anspruch 1 umfasst.

## Revendications

1. Connecteur optique comprenant :
une lentille (311a) qui capte un signal lumineux entrant sur un trajet de transmission de lumière ou une unité de détection de lumière ;
un logement (315) qui retient une pluralité des lentilles (311) et le trajet de transmission de lumière ou l'unité de détection de lumière (42) et qui est configuré pour être couplé à un connecteur optique côté transmission du signal lumineux ; et
une portion d'attache (316L, 316R) prévue dans une direction de réseau de la pluralité de lentilles, pour attacher le logement au connecteur optique côté transmission de manière attachable et détachable,
dans lequel, dans la pluralité de lentilles, une plage d'entrée du signal lumineux qui peut être captée sur le trajet de transmission de lumière ou l'unité de détection de lumière est étendue dans une direction orthogonale à la direction de réseau des lentilles, dans lequel
la pluralité de lentilles ont une forme ellipsoïdale avec un axe court dans la direction de réseau des lentilles et un axe long dans une direction orthogonale à la direction de réseau ;
une pluralité de groupes de lentilles incluant la pluralité de lentilles en réseau sont prévus adjacents les uns aux autres ;
les groupes de lentilles sont agencés en tant que couches ; et
la portion d'attache est prévue dans la direction de réseau de la pluralité de lentilles au niveau d'une position centrale des couches.

2. Connecteur optique selon la revendication 1, dans lequel
la pluralité de lentilles étendent la plage d'entrée de façon à ce que le signal lumineux soit capté sur le trajet de transmission de lumière ou l'unité de détection de lumière, dans une plage autorisée de rotation autour d'un axe dans la direction de réseau des lentilles dans un état dans lequel le logement est attaché au connecteur optique côté transmission par la portion d'attache.

3. Câble (20) terminé par le connecteur optique selon la revendication 1.

4. Dispositif de communication optique (10) comprenant le connecteur optique selon la revendication 1.
